# EUROPÄISCHE PATENTSCHRIFT

(11) **EP 1 425 337 B1**
(45) Veröffentlichungstag und Bekanntmachung des Hinweises auf die Patenterteilung: **02.07.2008**
(21) Anmeldenummer: 02751175.7
(22) Anmeldetag: 19.08.2002
(51) Int. Cl.: C08J 11/06, C08G 64/42

(54) **VERFAHREN ZUR VERWERTUNG VON POLYCARBONATEN**
METHOD FOR RECYCLING POLYCARBONATES
PROCEDE POUR VALORISER DES POLYCARBONATES

(30) Priorität: 31.08.2001 DE 10142735
(43) Veröffentlichungstag der Anmeldung: 09.06.2004
(73) Patentinhaber: Bayer MaterialScience AG, 51368 Leverkusen (DE)
(72) Erfinder: HÄHNSEN, Heinrich, 47228 Duisburg (DE); HUCKS, Uwe, 46519 Alpen (DE); KRATSCHMER, Silke, 60488 Frankfurt (DE); SCHRAUT, Manfred, 47809 Krefeld (DE)
(86) Internationale Anmeldenummer: PCT/EP2002/009237
(87) Internationale Veröffentlichungsnummer: WO 2003/020805

(56) Entgegenhaltungen:
- DE-A- 19 933 132

## Beschreibung

Die vorliegende Anmeldung betrifft ein Verfahren zur chemisch-werkstofflichen Verwertung von niedermolekularen (Co)Polycarbonatrückständen, - produktionsabfällen, -resten, -rezyklaten und ähnlichen (Co)Polycarbonatmassen durch Aufkondensation von aromatischen Polycarbonaten oder Copolycarbonaten zu technisch verwertbaren höheren Molmassen.

Polycarbonate, bspw. aus Bisphenol A, sind zumeist amorphe technische Thermoplaste mit hochwertigen Eigenschaften, wie z.B. hohe Transparenz, Wärmeformbeständigkeit und Zähigkeit. Gleiches gilt auch für aromatische Copolycarbonate, die beispielsweise aus Bisphenol A und einem Cobisphenol aufgebaut sind. Die Herstellkosten solcher Materialien und ihr Eigenschaftsniveau rechtfertigen daher auch anspruchsvollere Verwertungsveifahren, wenn ausgediente Formteile oder Produktionsausschuss einer ökologisch notwendigen und wirtschaftlich sinnvollen Verwertung zugeführt werden sollen. Die Schere zwischen Verfahrenskosten und Wirtschaftlichkeit liegt bei aromatischen Polycarbonaten wesentlich günstiger als bei vielen anderen Thermoplasten, so dass sich grundsätzlich auch Verfahren lohnen, die aus mehreren Prozessschritten bestehen. Es besteht jedoch immer das Bestreben, einfachere und wirtschaftlichere Verfahren als die bekannten zu finden, um preiswerter produzieren zu können

Das mechanische und physikalische Eigenschaftsniveau von Polycarbonat ist wie bei allen Thermoplasten entscheidend vom Molekulargewicht abhängig. Produktionsabfälle, Rezyklate etc. besitzen jedoch häufig nicht bzw. nicht mehr die erforderlichen Molekulargewichte. Daher ist eine direkte werkstoffliche Wiederverwertung von Produktionsabfällen oder Rezyklaten nur sehr eingeschränkt möglich.

Bei der Wiederverwertung von Polycarbonatrückständen, -produktionsabfällen, -resten, -rezyklaten und ähnlichen Polycarbonatmassen ist es daher wünschenswert und wesentlich, das Molekulargewicht auf ein für die geplante neue Anwendung hinreichendes Niveau anzuheben. So möchte man z.B. niedermolekularen Produktionsausschuss aus der PC-Herstellung für Compact Discs in den Molekulargewichtsbereich für die Spritzgussverarbeitung anheben. Oder das mittlere Molekulargewicht von PC-Rezyklat aus der Entschichtung von Compact Discs soll so weit erhöht werden, dass das Material z.B. als Komponente in der Herstellung von PC/ABS-Blends eingesetzt werden kann.

Eine Aufkondensation von zur chemisch-werkstofflichen Verwertung anstehenden Polycarbonatformmassen wird in der Literatur wenig beschrieben. So wird in EP-A 931 810 ein Verfahren zur Molekulargewichtserhöhung von abgebauten niedermolekularen Polykondensaten wie Polyamiden, Polyestern und Polycarbonaten unter Verwendung von reaktiven Kettenverlängerern offenbart. Diese Kettenverlängerer reagieren in der Kunststoffschmelze, z.B. auf einem Extruder, unter üblichen Compoundierbedingungen mit den funktionellen Kettenenden des Polymeren. Als Kettenverlängerer werden spezielle Bisepoxide genannt oder diese in Kombination mit u. a. Epoxiden, Bisoxazolinen, Dicyanaten, Tetracarbonsäuredianhydriden, Bismaleinimiden und Carbodiimiden. Es wird jedoch kein Beispiel für das Funktionieren des Verfahrens mit Polycarbonat gegeben. Eigene Versuche der Anmelderin zeigten für Polycarbonat keinen Molekulargewichtsaufbau nach dem in EP-A 931 810 beschriebenen Verfahren.

Gegenstand der DE-PS 43 26 906 ist ein Verfahren zum chemischen Recycling von Polycarbonat durch Umesterung mit Hydroxyverbindungen, insbesondere Phenol, bis zum Gewinn des Bisphenols und der veresterten Carbonateinheit und anschließende Resynthese von Polycarbonat in der Schmelze. Dieses Verfahren arbeitet zwar unter Erhalt des Bisphenols und der Carbonateinheit, es wird aber das Polycarbonat durch Umesterung zunächst total abgebaut. Neben dem Abbau nützlicher Bindungen, die hinterher wieder aufgebaut werden müssen, ist auch die Verfahrensführung aufwendig und teuer.

Die DE-OS 42 40 314 unterscheidet sich von vorstehender Patentschrift im wesentlichen durch einen vorgeschalteten Abbau des Polycarbonats zu Oligomeren, der durch Umesterung mit niedrigsiedenden Monophenolen erfolgt. Anschließend wird aus dem Abbauprodukt und ggf. einem Zusatz von Diarylcarbonat durch Rekondensation unter Abspaltung des Monophenols zunächst ein höherviskoses Oligomer mit einem bestimmten Gehalt an OH-Endgruppen erzeugt, welches dann in der letzten Stufe unter verschärften Reaktionsbedingungen in der Schmelze zum gewünschten Polycarbonat polykondensiert wird. Auch hier wird das Polycarbonat zunächst abgebaut, womit ein zusätzlicher Verfahrensschritt notwendig wird. Nachteilig ist ebenfalls, dass Oligomere mit OH-Endgruppen wesentlich empfindlicher gegen thermische und oxidative Belastung als die entsprechenden Polymere sind und rasch verfärben und geschädigt werden. Der Auflcondensationsprozess ist daher empfindlich und muss aufwendig kontrolliert werden, um eine präzise Reaktionsführung, die solche Effekte minimiert, zu erreichen.

DE-OS 44 21 701 schließlich offenbart ein Verfahren zum chemischen Recycling von Polycarbonaten durch Abbau mit Diarylcarbonaten zu Oligomeren. Nach deren Kristallisation in einem bestimmten Lösungsmittel, Reinigung und Trocknung werden diese zu Polycarbonat, ggf. unter Zusatz von Bisphenolen und eines Katalysators, wieder aufkondensiert. Die Nachteile dieses Recyclingprozesses sind die gleichen wie bei den vorbeschriebenen Verfahren gemäß DE-PS 43 26 906 und DE-OS 42 40 314.

Ausgehend von diesem Stand der Technik bestand die Aufgabe somit darin, ein Verfahren bereitzustellen, welches in möglichst einfacher und effizienter Art und Weise die Wiederverwertung von niedermolekularen (Co)Polycarbonatrückständen, - produktionsabfällen, -resten, -rezyklaten durch Erhöhung des Molekulargewichts von Polycarbonaten oder Copolycarbonaten ermöglicht.

Es wurde nun gefunden, dass es überraschenderweise möglich ist, Polycarbonate oder Copolycarbonate durch einfaches Aufschmelzen im Vakuum, gegebenenfalls mit Bisphenolen oder geeigneten Oligocarbonaten mit OH-Endgruppen, direkt zu Polycarbonaten oder Copolycarbonaten höherer Molgewichte aufzukondensieren.

Die vorliegende Erfindung betrifft daher Verfahren zur Wiederverwertung von niedermolekularen (Co)Polycarbonatrückständen, -produktionsabfällen, -resten, - rezyklaten durch Auflcondensation von aromatischen Polycarbonaten oder Copolycarbonaten, dadurch gekennzeichnet, dass man das (Co)Polycarbonat in geeigneten Aggregaten aufschmilzt und die Schmelze einer geeigneten batchweise oder kontinuierlich betriebenen Reaktorvorrichtung zuführt, ggf. unter Zusatz eines Bisphenols oder Oligocarbonats mit OH-Endgruppen sowie ggf. eines Umesterungskatalysators, und die Polycarbonatschmelze im Temperaturbereich von 250-350°C, bei einem Druck unterhalb von 5 mbar und einer mittleren Verweilzeit von 0.01 bis 0,3 Stunden für Schnecken- bzw. Extrudermaschinen sowie 0,2 bis 4 Stunden für Rührkessel, Knetapparate und Scheiben- oder Korbreaktoren einer Schmelzumesterungsreaktion unterwirft. Dabei werden Polycarbonate erhalten, die ein höheres Molekulargewicht gegenüber dem Ausgangspolycarbonat aufweisen.

Nach dem erfindungsgemäßen Verfahren wird das aufzukondensierende Polycarbonat oder Copolycarbonat, bevorzugt Bisphenol A-Polycarbonat, als Granulat oder Mahlgut von PC-Formteilen mittels geeigneter Maschinen in die Schmelze überführt, die dann in einer batchweise oder kontinuierlich betriebenen Reaktorvorrichtung aufkondensiert wird. Hierzu sind geeignete Werte für die Reaktionsparameter Druck, Temperatur und Verweilzeit zu wählen. Ebenso sind, falls notwendig, geeignete Katalysatoren zu wählen und zuzusetzen.

Geeignete Bereiche der Reaktionsparameter sind beispielsweise 0,01 bis 5 mbar, bevorzugt 0,1 bis 2 mbar, 250-350°C Schmelzetemperatur, bevorzugt 280-320°C und mittlere Verweilzeiten von 0.01 bis 0,3 Stunden für Schnecken- bzw. Extrudermaschinen sowie 0,2 bis 4 Stunden für Rührkessel, Knetapparate und Scheiben- oder Korbreaktoren. Bevorzugt sind im Fall der Scheiben- oder Korbreaktoren Verweilzeiten von 0.5 bis 2 Stunden.

Druck und Temperatur können bei diskontinuierlichen Verfahren in einem Zeitprogramm bis zum Erreichen der angegebenen Bereiche und in den angegebenen Bereichen variiert werden. Kontinuierliche Prozesse werden bei den geeigneten Temperatur- und Druckbedingungen üblicherweise konstant gefahren, wobei über die Reaktorlänge Druck- und Temperaturprofile eingestellt werden können.

Bevorzugt, besonders bevorzugt oder ganz besonders bevorzugt sind Ausführungsformen, in welchen die unter bevorzugt, besonders bevorzugt oder ganz besonders bevorzugt genannten Parameter, Definitionen und Erläuterungen angewandt werden.

Die oben und im folgenden aufgeführten allgemeinen oder in Vorzugsbereichen aufgeführten Definitionen, Parameter bzw. Erläuterungen können jedoch auch untereinander, also zwischen den jeweiligen Bereichen und Vorzugsbereichen beliebig kombiniert werden.

Das eingesetzte Polycarbonat oder Copolycarbonat weist entweder bereits eine mittlere Konzentration an phenolischen Endgruppen von über 100 ppm OH, bevorzugt 100 - 1500 ppm, besonders bevorzugt 400 - 1000 ppm, auf, oder diese wird in der Schmelze durch Zusatz von Bisphenolen, vorzugsweise Bisphenol A, oder Oligocarbonaten mit OH-Endgruppen, gezielt eingestellt. Bei der Umsetzung in der Schmelze zu höheren Molekulargewichten werden abgespaltene flüchtige Anteile über die Brüden aus der Reaktorvorrichtung abgeleitet. Die dabei anfallenden geringen Mengen werden auf geeignete Weise aus dem Prozess ausgeschleust, was das Verfahren erheblich vereinfacht.

Die Aufkondensation kann in geeigneten Rührkesseln, Schnecken- oder Knetapparaten, Extrudern, Scheiben- oder Korbreaktoren, und in Kombinationen solcher Apparate durchgeführt werden. Bevorzugt sind für kontinuierliche Verfahrensweisen Extruder oder Korb- bzw. Scheibenreaktoren, besonders bevorzugt Korb- bzw. Scheibenreaktoren, wie in DE Anm. Nr. 1 011 98 51 oder DE -C2 44 47 422 beschrieben. Korb- oder Scheibenreaktoren sind auch für eine diskontinuierliche Verfahrensführung geeignet.

Die Aufkondensation muss gegebenenfalls durch Zusatz eines Kondensationskatalysators beschleunigt werden. Geeignete Katalysatoren und deren Einsatzkonzentrationen können der Literatur entnommen werden (Chemistry and Physics of Polycarbonates, Polymer Reviews, H. Schnell, Vol. 9, Seiten 44-51, John Wiley & Sons, 1964; DE-PS 1031 512; EP-A 360 578; EP-A 351 168; US-A 3 442 854).

Bevorzugt sind alkalisch wirkende Alkali- oder Erdalkaliverbindungen sowie Ammonium- oder Phosphoniumsalze, im folgenden als Oniumsalze bezeichnet.

Phosphoniumsalze im Sinne der Erfindung sind solche der Formel (IV), 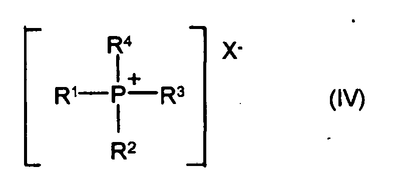 wobei R¹⁻⁴ dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und X- ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann.

Bevorzugte Katalysatoren sind
Tetraphenylphosphoniumchlorid,
Tetraphenylphosphoniumhydroxid,
Tetraphenylphosphoniumphenolat,
besonders bevorzugt Tetraphenylphosphoniumphenolat.

Weiterhin bevorzugte Katalysatoren, die allein oder gegebenenfalls zusätzlich zu einem Oniumsalz verwendet werden können, sind alkalisch wirkende Verbindungen von Alkalimetallen und Erdalkalimetallen, wie Hydroxide, Alkoxide und Aryloxide von Lithium, Natrium, Kalium, Magnesium und Calcium, vorzugsweise von Natrium. Am meisten bevorzugt sind Natriumhydroxid und Natriumphenolat sowie das Natriumbisphenolat von Bisphenol A.

Die Einführung des Polycarbonats oder Copolycarbonats in den Kondensationsreaktor geschieht vorzugsweise über eine Schnecke als Aufschmelzaggregat. Wenn Bisphenole oder Oligomere mit OH-Endgruppen zur Erhöhung der OH-Endgruppenkonzentration zudosiert werden, ist die Schnecke gleichzeitig auch Mischaggregat. Zwischen Schnecke und Kondensationsreaktor kann ein Schmelzesieb mit oder ohne Rückspüleinrichtung positioniert werden, um aus der dünnflüssigen Schmelze partikuläre Kontaminanten ≥ 5 µm zurückzuhalten. Die nach der Polykondensation aus dem Kondensationsreaktor abfließende Schmelze wird mittels einer Zahnradpumpe ausgetragen. Dabei kann die Schmelze über statische Mischer oder Extruder geleitet und mit Additiven und sonstigen Zusatzstoffen zur Einstellung spezieller Formulierungen der erzeugten Polycarbonate vermischt werden, um dann zur Granulation geführt zu werden.

Mögliche Additive werden z.B. in WO 99/55772, S. 15 - 25, DE Anm. Nr. 10122496.6 und in "Plastics Additives", R. Gächter und H. Müller, Hanser Publishers 1983, beschrieben. Prinzipiell kann die Zugabe der Additive zu jedem Zeitpunkt der Reaktion geschehen, bevorzugt vor der Granulierung.

Dem aufzukondensierenden Polycarbonat oder Copolycarbonat kann wahlweise ein beliebiges Bisphenol oder ein Oligocarbonat mit OH-Endgruppen zugesetzt werden.

Bevorzugt wird das Bisphenol oder das OH-haltige Oligocarbonat zugesetzt, welches dem aufzukondensierenden Polycarbonat zugrundeliegt.

Die Dosierung des Bisphenols oder des Oligocarbonats im Gewichtsverhältnis zum eingesetzten Polycarbonat liegt beim Bisphenol im Bereich von 0:100 bis 10:100, bevorzugt von 0.1:100 bis 5:100, besonders bevorzugt von 0.2:100 bis 1:100, und beim Oligocarbonat im Bereich von 0:100 bis 50:100, bevorzugt von 0.5:100 bis 30:100, besonders bevorzugt von 1:100 bis 10:100.

Beispiele für Bisphenole, die erfindungsgemäß eingesetzt werden können, bzw. auch die Basis der aufzukondensierenden Polycarbonate darstellen können, sind in der WO-A1 01/05866, S. 6-8, zu finden. Bevorzugt ist 4,4'-Dihydroxybiphenyl, 4,4'-Dihydroxydiphenylsulfid, 2,2-Bis-(4-hydroxyphenyl)-propan (Bisphenol A), 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-methan, 2,2-Bis-(3,5-dimethyl-4-hydroxyphenyl)-methan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan, α,α'-Bis-(4-hydroxyphenyl)-p-diisopropylbenzol, 2,2-Bis-(3-chlor-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(p-hydroxyphenyl)-3,3,5-trimethylcyclohexan. Besonders bevorzugte Diphenole sind 4,4'-Dihydroxybiphenyl, 2,2-Bis-(4-hydroxyphenyl)-propan (Bisphenol A) und 1,1-Bis-(p-hydroxyphenyl)-3,3,5-trimethylcyclohexan. Ganz besonders bevorzugt werden 2,2-Bis-(4-hydroxyphenyl)-propan (Bisphenol A) und 1,1-Bis-(p-hydroxyphenyl)-3,3,5-trimethylcyclohexan, insbesondere 2,2-Bis-(4-hydroxyphenyl)-propan (Bisphenol A). Dementsprechend können ebenfalls die aus diesen Bisphenolen gewonnenen Oligomere erfindungsgemäß eingesetzt werden.

Das eingesetzte Polycarbonat oder Copolycarbonat weist ein mittleres Molekulargewicht M_{w} von 15.000 bis 30.000 auf, bevorzugt 16.000 bis 25.000, besonders bevorzugt von 17.000 bis 22.000, ermittelt durch Messung der relativen Lösungsviskosität in Dichlormethan, geeicht durch Lichtstreuung. Bevorzugt wird ein PC-Rezyklat, besonders bevorzugt ein PC-Rezyklat aus Compact Discs eingesetzt.

Die eingesetzten Polycarbonate und Copolycarbonate können dem bekannten Phasengrenzflächen- oder Schmelzeumesterungsprozess entstammen und können deshalb unterschiedliche Kettenabbrecher enthalten.

Als Kettenabbrecher geeignet sind bspw. Phenol, Octylphenol, Cumylphenol und t-Butylphenol. Weitere typische Kettenabbrecher für Polycarbonat können der WO-A1 01/05866, S. 4-6, entnommen werden. Es können auch Mischungen von Kettenabbrechern, z.B. über die Mischung von unterschiedlichen Polycarbonaten, auftreten. Polycarbonate aus dem Schmelzeumesterungsverfahren haben vorzugsweise das Phenol des für die Herstellung verwendeten Diphenylcarbonats als Kettenabbrecher.

Es kann sowohl einheitlich synthetisiertes Polycarbonat oder Copolycarbonat als auch eine Mischung verschiedener Polycarbonate oder Copolycarbonate aufkondensiert werden. Die Polycarbonate können sich dabei im Hinblick auf das mittlere Molekulargewicht, das verwendete Bisphenol und/oder den verwendeten Kettenabbrecher, Verzweiger etc. unterscheiden. Weiterhin können die Polycarbonate Kettenverzweiger enthalten. Übliche Kettenverzweiger können ebenfalls der WO-A1 01/05866, S. 8-9, entnommen werden. Bevorzugt sind Polycarbonate, die aus dem gleichen Bisphenol aufgebaut sind, besonders bevorzugt aus Bisphenol A.

Mischungen treten besonders dann auf, wenn uneinheitliche PC-Rezyklate aus Gebrauchsabfällen und Verarbeitungsausschuss aufkondensiert werden sollen.

Die nach dem erfindungsgemäßen Verfahren erhältlichen Polycarbonate können auf üblichen Maschinen, beispielsweise auf Extrudern oder Spritzgußmaschinen, zu beliebigen Formkörpern, beispielsweise zu Folien oder Platten, in üblicher Weise verarbeitet werden. Weiterhin können den erfindungsgemäß erhältlichen Polycarbonaten auch andere Polymere zugemischt werden, z.B. Polyolefine, Polyurethane, Polyester, ABS und Polystyrol. Der Zusatz dieser Stoffe erfolgt vorzugsweise auf herkömmlichen Aggregaten zum fertigen Polycarbonat, kann jedoch, je nach den Erfordernissen, auch auf einer anderen Stufe des Herstellverfahrens erfolgen.

Die nach dem erfindungsgemäßen Verfahren erhältlichen Polycarbonate unterscheiden sich von Primärware, also der bekannten handelsüblichen Ware, durch das Vorhandensein fluoreszenzaktiver Zentren, die bei Bestrahlung mit UV-Licht, z.B. Schwarzlicht, fluoreszieren. Dieser optische Effekt kann z.B. bei Sortiervorgängen des werkstofflichen Recyclings zur Kunststofferkennung genutzt werden oder zur Unterscheidung zwischen einem Rezyklat und Primärware.

Zur Änderung bzw. Verbesserung bestimmter Eigenschaften können den erfindungsgemäß hergestellten Polycarbonaten Hilfs- und Verstärkungsstoffe zugemischt werden. Als solche sind u. a. in Betracht zu ziehen: Thermo- und UV-Stabilisatoren, Fließhilfsmittel, Entformungsmittel, Flammschutzmittel, Hydrolysestabilisatoren, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente, Farbstoffe und deren Kombination. Solche Verbindungen werden z.B. in WO 99/55772, S. 15 - 25, und in "Plastics Additives", R. Gächter und H. Müller, Hanser Publishers 1983, beschrieben.

Diese Zusätze können z.B. in die Aufschmelz- und Austragsschnecke oder auch direkt in den Schmelzereaktor dosiert werden, bevorzugt ist jedoch das Austragsaggregat.

Die erfindungsgemäß hergestellten Polycarbonate können in vielen mechanisch anspruchsvollen Anwendungen eingesetzt werden. Sie eignen sich somit zur Herstellung von Formkörpern und Extrudaten verschiedenster Ausprägung. Mögliche Anwendungen sind
- Sicherheitsscheiben, die bekanntlich in vielen Bereichen von Gebäuden, Fahrzeugen und Flugzeugen erforderlich sind, sowie als Schilde von Helmen,
- Folien, insbesondere Skifolien,
- Blaskörper (siehe beispielsweise US-Patent 2 964 794), beispielsweise 1 bis 5 Gallon Wasserflaschen,
- lichtdurchlässige Platten, insbesondere Stegplatten, beispielsweise zum Abdecken von Gebäuden wie Bahnhöfen, Gewächshäusern und Beleuchtungsanlagen,
- optische Datenspeicher,
- Ampelgehäuse oder Verkehrsschilder,
- Schaumstoffe (siehe beispielsweise DE-AS 1 031 507),
- Fäden und Drähte (siehe beispielsweise DE-AS 1 137 167 und DE-OS 1 785 137),
- transluzente Kunststoffe mit einem Gehalt an Glasfasern für lichttechnische Zwecke (siehe beispielsweise DE-OS 1 554 020),
- transluzente Kunststoffe mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreuenden Formteilen,
- Präzisionsspritzgußteilchen, wie beispielsweise Linsenhalterungen (hierzu verwendet man Polycarbonate mit einem Gehalt an Glasfasern, die gegebenenfalls zusätzlich etwa 1 - 10 Gew.-% MoS₂, bezogen auf Gesamtgewicht, enthalten),
- optische Geräteteile, insbesondere Linsen für Foto- und Filmkameras (siehe beispielsweise DE-OS 2 701 173),
- Lichtübertragungsträger, insbesondere Lichtleiterkabel (siehe beispielsweise EP-A1 0 089 801),
- Elektroisolierstoffe für elektrische Leiter und für Steckergehäuse sowie Steckverbinder,
- Mobiltelefongehäusen mit verbesserter Beständigkeit gegenüber Parfüm, Rasierwasser und Hautschweiß,
- Network interface devices,
- Trägermaterialien für organische Fotoleiter,
- Leuchten, z.B. Scheinwerferlampen, als sogenannte "head-lamps", Streulichtscheiben oder innere Linsen,
- medizinische Anwendungen, z.B. Oxygenatoren, Dialysatoren,
- Lebensmittelanwendungen, wie z.B. Flaschen, Geschirr und Schokoladenformen,
- Anwendungen im Automobilbereich, wo Kontakt zu Kraftstoffen und Schmiermitteln auftreten kann, wie beispielsweise Stoßfänger, ggf. in Form geeigneter Blends mit ABS oder geeigneten Kautschuken,
- Sportartikel, wie z.B. Slalomstangen oder Skischuhschnallen,
- Haushaltsartikel, wie z.B. Küchenspülen und Briefkastengehäuse,
- Gehäuse, wie z.B. Elektroverteilerschränke, Gehäuse für Elektrozahnbürsten und Föngehäuse,
- Transparente Waschmaschinen - Bullaugen mit verbesserter Beständigkeit gegenüber der Waschlösung,
- Schutzbrillen, optische Korrekturbrillen,
- Lampenabdeckungen für Kücheneinrichtungen mit verbesserter Beständigkeit gegenüber Küchendunst, insbesondere Öldämpfen,
- Verpackungsfolien für Arzneimittel,
- Chip-Boxen und Chip-Träger,
- Sowie sonstige Anwendungen, wie z.B. Stallmasttüren oder Tierkäfige.

Die folgenden Beispiele sollen den Gegenstand der vorliegenden Anmeldung illustrieren ohne ihn damit einzuschränken.

### Beispiel 1

PC-Mahlgut aus der Entschichtung von Compact Discs nach dem in der EP-A 537 567 (S. 1, 2, 5, 6) beschriebenen Verfahren wurden nach Vortrocknung im Umlufttrockner (2 h/120°C) über eine Zweiwellenschnecke ZSK 25 (Werner & Pfleiderer) aufgeschmolzen und kontinuierlich bei 300°C in einen Korbreaktor dosiert. Über eine Waage wurde eine Mischung aus 0.25 Gew.-% Bisphenol A, bezogen auf eingesetztes Polycarbonat, mit einem Teil des zu kondensierenden Polycarbonats gleichzeitig mit in die Aufschmelzschnecke dosiert. Insgesamt betrug der PC-Zustrom über die Feedschnecke 20 kg/h. Ein Kondensationskatalysator wurde nicht eingesetzt. Der Kondensationsreaktor war eine Trommel mit Schmelzeein- und auslass an den Enden sowie einem Vakuumanschluss im Gasraum, in der eine Welle mit Scheiben, die in die Schmelze eintauchte, langsam rotierte. Die Drehzahl betrug 0,8 Umdrehungen pro Minute; die mittlere Verweilzeit der Schmelze betrug etwa 180 Minuten. Die Schmelzetemperatur betrug 300°C, der Druck im Gasraum des Reaktors 0.7-0.8 mbar. Der Austrag der aufkondensierten Schmelze erfolgte über eine Zahnradpumpe mit anschließender Granuliereinheit. Die Eigenschaften der so erhaltenen PC-Granulate und des Ausgangsmaterials wurden in Tabelle 1 zusammengefasst.

**Tabelle 1: Aufkondensation von Rezyklat aus Compact Discs (nach Entschichtung) in einem Scheibenreaktor**

| **Eigenschaften** | **Dimension** | **Ausgang ¹⁾** | **Aufkondensate** | |
|---|---|---|---|---|
| | | A | B (A+BPA) | C (A+B |
| **Mechanik** | | | | |
| Reißdehnung | % | 3.5 | 82 | 91 |
| Schlagzähigkeit | | | | |
| **IZOD-Schlagzähigkeit, RT** | kJ/m² | 28 | n.g. | n.g |
| **IZOD-** | kJ/m² | 8 s | 67z | |
| **Kerbschlagzähigkeit, RT** | | 61z/17s | | |
| Gehalte | | | | |
| **phenolisches OH** | ppm | 600 | 500 | 600 |
| Fließfähigkeit | | | | |
| **MVR 300°C/1.2 kg** | cm³/10 min | 65 | 16 | 23 |
| **rel. Lösungsviskosität** | - | 1.202 | 1.271 | 1.248 |
| **1)A: CD-Rezyklat, gewonnen durch Entschichtung von Mahlgut aus CD-Platten 2)B: A + 0.25 Gew.-% BPA, 310/300°C, 0.8 mbar, 180 min mittL Verweilzeit C: A + 0.25 Gew.-% BPA, 300/290°C, 0.7 mbar, 180 min mittl. Verweilzeit s =spröd; z = zäh; n.g. = nicht gebrochen** | | | | |

### Beispiel 2

Ebenso wurde niedermolekulares PC-Granulat aus Produktionsabfällen zu einem höhermolekularen Polycarbonat aufkondensiert. Auch hierbei wurde Bisphenol A und kein Kondensationskatalysator wie zuvor eingesetzt. Die Materialwerte wurden vergleichend in Tabelle 2 zusammengestellt.

**Tabelle 2: Aufkondensation von niedermolekularem PC-Granulat für die Herstellung von Compact Discs in einem Scheibenreaktor**

| **Eisenschaften** | **Dimension** | **Ausgang¹⁾** D Makrolon DP 1-1265 | **Aufkondensat** E (D+BPA) |
|---|---|---|---|
| Mechanik | | | |
| Reißdehnung | % | 60 | 100 |
| Schlagzähigkeit | | | |
| **IZOD-Schlagzähigkeit, RT** | kJ/m² | 28 | n.g. |
| **IZOD-** | kJ/m² | 10 | 60 |
| **Kerbschlagzähigkeit, RT** | | | |
| Gehalte | | | |
| **OH** | ppm | 130 | 550 |
| Fließfähigkeit | | | |
| **MVR 300°C/1.2 kg** | cm³/10 min | 71 | 40 |
| **rel. Lösungsviskosität** | - | 1.195 | 1.223 |
| **1) D: Primärware-Granulat 2) E: D + 0.25 Gew.-% BPA, 320/310°C, 0.75 mbar, 180 min mittl. Verweilzeit** | | | |

### Beispiel 3

Schließlich wurde PC-Mahlgut aus der Entschichtung von Compact Discs auch auf einem Extruder aufkondensiert. Dabei handelte es sich um eine Zweiwellenschnecke ZSK 32 (Werner & Pfleiderer) von 1.4 m Länge mit einem 0.8 m langen Vakuumdom, beginnend bei 0.4 m der Schneckenlänge. Die Schmelzekondensation wurde auch hier ohne Zusatz eines Umesterungskatalysators gefahren. Vor Aufgabe über eine Dosierwaage wurde das Material im Umlufttrockner vorgetrocknet (2 h/120°C). Die Ergebnisse sind in Tabelle 3 zusammengefasst.

**Tabelle 3: Aufkondensation von Compact Disc-Rezyklat nach Entschichtung auf einer Zweiwellenschnecke (ZSK 32, Werner & Pfleiderer)**

| **Eigenschaften** | **Dimension** | **Ausgang**¹⁾ F | **Aufkondensat**²⁾ G (aus F) |
|---|---|---|---|
| **Mechanik** | | | |
| Reißdehnung | % | 2.7 | 61 |
| Schlagzähigkeit | | | |
| **IZOD-Schlagzähigkeit,** | kJ/m² | 11s | n.g. |
| **RT** | kJ/m² | 35s | n.g. |
| **IZOD-Kerbschlag-zähigkeit, RT** | | | |
| Gehalte | | | |
| **OH** | ppm | 440 | 140 |
| Fließfähigkeit | | | |
| **MVR 300°C/1.2 kg** | cm³/10 | 82 | 18 |
| **rel. Lösungsviskosität** | min | 1.202 | 1.255 |
| Aufkondensation eines anderen Ausgangsmaterials (F') unter Zusatz von 0,25Gew.-%BPA: | | | |
| **OH-Gehalt** | ppm | 260 | 120 |
| **rel. Lösungsviskosität** - | | 1.198 | 1.265 |
| **1)F: CD-Rezyklat, gewonnen durch Entschichtung von Mahlgut aus CD-Platten 2)G: F schmelzekondensiert bei 320-340°C, 0.5-1 mbar, 2 kg/h Durchsatz, 100 U/min, 3-5 min mittl. Verweilzeit s =spröd; n.g. = nicht gebrochen** | | | |

### Messmethoden:

Reißdehnung, E-Modul nach ISO 527; Schlag-/Kerbschlagzähigkeit nach ISO 180/1C bzw. ISO 180/4A; phenolisches OH photometrisch mit TiCl₄ am Ti-Komplex; MVR nach ISO 1133; rel. Lösungsviskosität an PC-Lösung in Dichlormethan (5 g PC/1).

Man erkennt deutlich, dass mit dem erfindungsgemäßen Verfahren das Molekulargewicht von niedermolekularen Polycarbonaten (A, D, F) zu mittel- und hochviskosen Polycarbonaten (B, C, E, G) mit besseren mechanischen Eigenschaften wie Reißdehnung und Schlag-/Kerbschlagzähigkeit aufkondensiert werden kann.

## Patentansprüche

1. Verfahren zur Wiederverwertung von niedermolekularen (Co)Polycarbonatrückständen, -produktionsabfällen, -resten, -rezyklaten durch Aufkondensation von aromatischen Polycarbonaten und Copolycarbonaten, **dadurch gekennzeichnet, dass** man das (Co)Polycarbonat in geeigneten Aggregaten aufschmilzt und die Schmelze einer geeigneten batchweise oder kontinuierlich betriebenen Reaktorvorrichtung zuführt, ggf. unter Zusatz eines Bisphenols oder Oligocarbonats mit OH-Endgruppen sowie ggf. eines Umesterungskatalysators, und die Polycarbonatschmelze im Temperaturbereich von 250-350°C, bei einem Druck unterhalb von 5 mbar und einer mittleren Verweilzeit von 0.01 bis 0,3 Stunden für Schnecken- bzw. Extrudermaschinen sowie 0,2 bis 4 Stunden für Rührkessel, Knetapparate und Scheiben- oder Korbreaktoren einer Schmelzumesterungsreaktion unterwirft.

2. Verfahren nach Anspruch 1 **dadurch gekennzeichnet, dass** in einem Temperaturbereich von 280-320°C gearbeitet wird.

3. Verfahren nach Anspruch 1 **dadurch gekennzeichnet, dass** das Molekulargewicht der eingesetzten Polycarbonate und Copolycarbonate mit üblichen phenolischen Kettenabbrechern geregelt ist.

4. Verfahren nach Anspruch 1 **dadurch gekennzeichnet, dass** das Polycarbonat oder Copolycarbonat im Gemisch mit einem Bisphenol im Gewichtsverhältnis 100:0 bis 100:10 oder mit einem Oligocarbonat mit OH-Endgruppen im Gewichtsverhältnis 100:0 bis 100:50 eingesetzt wird.

5. Verfahren nach Anspruch 1 **dadurch gekennzeichnet, dass** die Aufkondensation der Schmelze durch einen üblichen Umesterungskatalysator für Polycarbonat beschleunigt wird.

6. Verfahren nach Anspruch 1 **dadurch gekennzeichnet, dass** Mischungen verschiedener Polycarbonate aufkondensiert werden.

## Claims

1. Process for the recycling of low molecular weight (co)polycarbonate residues, production wastes, production residues, production recyclates, by condensation of aromatic polycarbonates and copolycarbonates, **characterised in that** the (co)polycarbonate is melted in suitable units and the melt is fed into a suitable reactor device operated batch-wise or continuously, optionally with the addition of a bisphenol or oligocarbonate with OH terminal groups and optionally a transesterification catalyst, and the polycarbonate melt is subjected to a melt transesterification reaction in the temperature range 250-350°C, at a pressure below 5 mbar and a mean residence time of 0.01 - 3 hours for screw machines and extruder machines, and 0.2 - 4 hours for stirred vessels, kneading apparatus and disc or cage reactors.

2. Process according to claim 1, **characterised in that** it is carried out in a temperature range of 280-320°C.

3. Process according to claim 1, **characterised in that** the molecular weight of the polycarbonates and copolycarbonates used is regulated with conventional phenolic chain stoppers.

4. Process according to claim 1, **characterised in that** the polycarbonate or copolycarbonate is used in a mixture with a bisphenol in a weight ratio of 100:0 to 100:10 or with an oligocarbonate with OH terminal groups in a weight ratio of 100:0 to 100:50.

5. Process according to claim 1, **characterised in that** the condensation of the melt is accelerated with a conventional transesterification catalyst for polycarbonate.

6. Process according to claim 1, **characterised in that** mixtures of different polycarbonates are condensed.

## Revendications

1. Procédé pour valoriser des résidus, des déchets de production, des restes et des produits de recyclage de (co)polycarbonates de bas poids moléculaire par condensation de polycarbonates et de copolycarbonates aromatiques, **caractérisé en ce que** l'on fond le (co)polycarbonate dans des unités appropriées, que l'on achemine la masse fondue à un dispositif de réacteur approprié opéré de façon discontinue ou continue, le cas échéant en ajoutant un bisphénol ou un oligocarbonate comportant des groupes OH terminaux, ainsi que, le cas échéant, un catalyseur de transestérification, et que l'on soumet la masse fondue de polycarbonate à une réaction de transestérification dans l'intervalle de températures de 250 à 350 °C, à une pression inférieure à 5 mbar et pendant une durée de séjour moyenne comprise entre 0,01 et 0,3 heure pour des machines à vis ou des boudineuses et entre 0,2 et 4 heures pour des cuves à agitation, des malaxeurs et des réacteurs à disque ou à panier.

2. Procédé selon la revendication 1, **caractérisé en ce que** l'on travaille dans l'intervalle de températures de 280 à 320 °C.

3. Procédé selon la revendication 1, **caractérisé en ce que** le poids moléculaire des polycarbonates et des copolycarbonates mis en oeuvre est ajusté avec des agents de rupture de chaîne phénoliques usuels.

4. Procédé selon la revendication 1, **caractérisé en ce que** le polycarbonate ou le copolycarbonate est mis en oeuvre en mélange avec un bisphénol dans un rapport pondéral compris entre 100:0 et 100:10 ou avec un oligocarbonate comportant des groupes OH terminaux dans un rapport pondéral compris entre 100:0 et 100:50.

5. Procédé selon la revendication 1, **caractérisé en ce que** la condensation de la masse fondue est accélérée par un catalyseur de transestérification pour le polycarbonate usuel.

6. Procédé selon la revendication 1, **caractérisé en ce que** des mélanges de différents polycarbonates sont condensés.
